# EUROPEAN PATENT APPLICATION

(11) **EP 4 438 154 A1**
(43) Date of publication of application: **02.10.2024**
(21) Application number: 22898582.6
(22) Date of filing: 22.11.2022
(51) Int. Cl.: B01D 39/16, D01F 6/46, A61L 9/01, A61L 9/16, B03C 3/28

(54) **ELECTRET AND ELECTRET FILTER**

(30) Priority: 26.11.2021 JP 2021192211
(71) Applicant: TOYOBO MC Corporation, Osaka 530-0001 (JP)
(72) Inventor: KITAGAWA, Yoshiyuki, Otsu-shi, Shiga 520-0292 (JP)
(74) Representative: Vossius & Partner Patentanwälte Rechtsanwälte mbB
(86) International application number: PCT/JP2022/043218
(87) International publication number: WO 2023/095799

(57) **Abstract**

The electret of the present invention comprises: inorganic particles and a dispersant in a polyolefin resin; and a nitrogen-containing compound, wherein a value of a/b is 0.3 or smaller when a represents a maximum value of a depolarizing current at 50 to 100°C as measured by a TSC method, and b represents a maximum value of a depolarizing current at 100°C or higher as measured by the TSC method.

## Description

### TECHNICAL FIELD

The present invention relates to an electret and an electret filter.

### BACKGROUND ART

To date, porous filters have been used for dust protective masks, various air-conditioning elements, air cleaners, cabin filters, and various devices for purposes of dust collection, protection, ventilation, and the like. Among the porous filters, filters formed of fibrous products have high porosity and are advantageous in that their life span is long and airflow resistance is low. As such filters formed of fibrous products, nonwoven fabrics are suitably used.

Further, with respect to the above-described filters, in order to improve collection efficiency in dust collection and the like, a method that uses electrical attractive force of an electret is known. An electret is a material that can maintain and use electrostatic force by operating various dielectric materials in various manners. A filter that is provided with electric charge and that is formed as an electret is widely used as an electret filter.

In recent years, functional materials in which inorganic particles are contained in nonwoven fabrics have been studied. For example, a technology for obtaining an antimicrobial nonwoven fabric by mixing a surfactant and various inorganic particles into a main component resin has been disclosed (see Patent Literatures 1, 2, for example).

### CITATION LIST

### PATENT LITERATURE

[PTL 1] Japanese Laid-Open Patent Publication No. 2006-249615
[PTL 2] Japanese Laid-Open Patent Publication No. 2021-116483

### SUMMARY OF THE INVENTION

### PROBLEMS TO BE SOLVED BY THE INVENTION

The present inventor studied compatibility between blending of inorganic particles for imparting functionality to a nonwoven fabric and collection performance as an electret of the nonwoven fabric, and found a problem that a nonwoven fabric with use of a dispersant in a mixture of a polyolefin resin and inorganic particles was inferior in electric charge stability as an electret, and could not be handled in a manner equivalent to that for conventional electret filters, in various shape processing and storage.

Therefore, the present invention has been made in consideration of the above problem. An object of the present invention is to provide an electret in which inorganic particles are dispersed and which is excellent in electric charge stability.

### SOLUTION TO THE PROBLEMS

As a result of thorough study, the present inventor found that the configuration below allows obtainment of an electret and an electret filter that have excellent electric charge stability even when inorganic particles and a dispersant are contained therein, and arrived at the present invention. That is, the present invention is as follows.
1. An electret comprising: inorganic particles and a dispersant in a polyolefin resin; and a nitrogen-containing compound, wherein a value of a/b is 0.3 or smaller when a represents a maximum value of a depolarizing current at 50 to 100°C as measured by a TSC method, and b represents a maximum value of a depolarizing current at 100°C or higher as measured by the TSC method.
2. The electret according to the above 1., wherein a content of the nitrogen-containing compound is 0.01 to 1 mass% with respect to the polyolefin resin.
3. The electret according to the above 2., wherein the nitrogen-containing compound includes at least one of A to D indicated below,
   A: 1,3:2,4-dibenzylidene sorbitol,
   B: 1,3:2,4-bis(4-methylbenzylidene)-D-sorbitol,
   C: 1,3:2,4-bis(3,4-dimethylbenzylidene)-D-sorbitol, and
   D: 1,3,5-tris(2,2-dimethylpropionylamino)benzene.
4. The electret according to any one of the above 1. to 3., wherein the electret is a fibrous product.
5. The electret according to any one of the above 1. to 3., wherein the electret is a filament fiber nonwoven fabric.
6. An electret filter using the electret according to any one of the above 1. to 5..

### EFFECT OF THE INVENTION

By the present invention, it is possible to provide an electret and an electret filter that are excellent in electric charge stability while containing inorganic particles and a dispersant.

### DESCRIPTION OF EMBODIMENTS

Hereinafter, the present invention will be specifically described. However, the present invention is not limited to the following description and can also be carried out with appropriate modifications being made within the scope of the gist described above and below, and any of these modifications are included in the technical scope of the present invention.

For an electret of the present invention, a polyolefin resin having high electric resistance and hydrophobicity is used from the viewpoint of the degree of freedom for shape and electric charge stability of the electret. Examples of the polyolefin resin include homopolymers of olefins such as ethylene, propylene, butylene, hexene, octene, butadiene, isoprene, chloroprene, methyl-1-pentene, and cyclic olefins, and copolymers each formed of two or more types of the above-described olefins. As the polyolefin resin, one type of the above may be selected and used alone, or two or more types of them may be selected and used in combination. The polyolefin resin preferably includes at least one type selected from polyethylene, polypropylene, and polymethylpentene, and more preferably includes polypropylene. The content proportion of the polyolefin resin in the electret is preferably 80 mass% or more, more preferably 85 mass% or more, further preferably 90 mass% or more, particularly preferably 95 mass% or more, and most preferably 97 mass% or more.

In the resin used in the present invention, tacticity is preferably 85% or higher, more preferably 90% or higher, further preferably 90% or higher, and most preferably 95% or higher. In this case, either of an isotactic type and a syndiotactic type can be preferably used. When two or more types of polypropylene are used, one or more types are preferably included in the polyolefin in which the polypropylene is contained.

The electret in the present invention contains at least one type of inorganic particles in the polyolefin resin. As for the type of the inorganic particles, one type or two or more types of inorganic particles may be used in combination in accordance with the necessary characteristics. Specific examples of the inorganic particles include various metals, metal oxides, glass, ceramics, zeolites, and intercalation compounds. Among these, metal oxides, glass, zeolites, or intercalation compounds, in which, for example, a metal element such as gold, silver, copper, zinc, zirconium, manganese, aluminum, nickel, molybdenum, vanadium, tungsten, palladium, tin, or cobalt is held in the form of a single oxide or a composite oxide, solid solution, or ionic state, are preferred. The inorganic particles impart functionality to the electret, and specific examples of the function include dielectricity, piezoelectricity, opacity, coloration, antimicrobial properties, odor removal, antiviral properties, anti-allergenic properties, and the like.

The shape of the inorganic particles used in the present invention may be any shape that is plate-like, needle-like, rectangular, spherical, elliptical, or the like. These may be primary particles each composed of a single crystal or a polycrystal, or may be secondary particles caused by a strong bond or a weak bond. For the purpose of improving the electric charge stability of the electret, the inorganic particles preferably have a spherical, rectangular, or a plate-like shape having a small aspect ratio, and preferably are primary particles each composed of a single crystal or a polycrystal having a particle size described below, or secondary particles caused by a strong bond, and most preferably, the primary particles have a size described below. Since unintended fine granulation during extrusion and mixing processing is inhibited and the surface area can be made small, a composition that is preferable for maintaining the characteristics of the electret is obtained.

The average particle diameter of the inorganic particles used in the present invention is 0.1 µm to 10 µm. Preferably, the average particle diameter is 0.1 µm to 8 µm, more preferably 0.1 to 5 µm, further preferably 0.1 to 3 µm, and most preferably 0.1 to 2 µm. When the particle diameter is small, there is a concern about handling as nanoparticles, which is an important characteristic in complying with various nano-substance regulations. Meanwhile, when the particle diameter is too large, dispersibility becomes poor and a large amount needs to be added to exhibit functionality. In addition, embrittlement and decrease in processability of the polyolefin resin in which the inorganic particles are contained are likely to occur.

With respect to the content of the inorganic particles that, for example, impart an antimicrobial effect, the inorganic particles are contained, as a polyolefin resin composition, preferably by 0.03 to 10 mass%, more preferably 0.05 to 7 mass%, further preferably 0.1 to 5 mass%, and most preferably 0.15 to 3 mass%. When the content is too small, the antimicrobial effect becomes insufficient, and when the content is too large, processability decreases and mechanical strength decreases.

The method of adding the inorganic particles is not limited in particular as long as desired characteristics are obtained. Examples thereof include a method of adding particles or a particle precursor during resin polymerization, a method of adding particles or a particle precursor during production of a master batch or a compound, and a method of adding particles or a particle precursor during production of a molded body, and these methods can be used alone or in combination.

Among these, the method of adding during production of a master batch or a compound or during production of a molded body can be widely applied as the method of adding various inorganic particles. When the inorganic particles and the polyolefin only are mixed and fed into an extruder used during melt molding, aggregates are generated due to pressurization performed until the polyolefin is melted, and thus, nozzle clogging is likely to occur. Therefore, during melt molding, it is preferable to add a dispersant together with the inorganic particles.

The dispersant is not limited in particular as long as the dispersant is a material suitable as a conventionally known inorganic particle dispersant. A dispersant, having affinity to the inorganic particles, that has, in a single molecule, a hydrophilic group such as an ester group, a carboxyl group, a sulfonic acid group, an amide group, an amino group, or an ether group and a hydrophobic group such as a hydrocarbon group or a perfluoro group, can be preferably used. With respect to the molecular weight, in consideration of the viscosity and the size and dispersibility of the target inorganic particles, a dispersant that is appropriate can be used. The dispersant may be substantially the same chemical substance as a surfactant.

Examples of the compound containing an ester group include glycerine fatty acid esters, sorbitan fatty acid esters, and fatty acid esters, and these can be used in consideration of affinity with the inorganic particles and the polyolefin and the melting point of the inorganic particles and the polyolefin.

In consideration of the extruder set temperature, the melting point of the dispersant that is mixed during melting is preferably the same as or lower than the melting point of the polyolefin resin to be the electret, more preferably lower by 20°C or more, and further preferably 50°C or more.

When the dispersant has significantly high reactivity with the inorganic particles, and/or when the dispersant has a melting point higher than that of the polyolefin resin to be the electret, it is also preferable to attach the dispersant to the surface of the inorganic particles in advance, by using application or hot mixing in the form of a solution or a precursor.

The addition amount of the dispersant can be more preferably adjusted in accordance with the amount and shape of the inorganic particles to be added. For example, the blending ratio of the dispersant relative to the mass of the inorganic particles is preferably 1 to 200 mass%, more preferably 5 to 100 mass%, and further preferably 10 to 50 mass%. When the amount of the dispersant is too large, decrease in electret properties may be caused, and when the amount of the dispersant is too small, dispersibility becomes insufficient.

In the electret of the present invention, when, in combination with the dispersant, one or more of A to D indicated below are added as a nitrogen-containing compound, which is a compound that contains nitrogen, the electric charge stability can be more increased. In particular, decrease in the electric charge stability due to addition of the dispersant can be suppressed.
A: 1,3:2,4-dibenzylidene sorbitol,
B: 1,3:2,4-bis(4-methylbenzylidene)-D-sorbitol,
C: 1,3:2,4-bis(3,4-dimethylbenzylidene)-D-sorbitol, and
D: 1,3,5-tris(2,2-dimethylpropionylamino)benzene.

In the electret of the present invention, a preferable content of the nitrogen-containing oxide relative to the polyolefin resin is 0.01 to 1 mass%, and from the viewpoint of the melting point and the solubility, with respect to A to C, 0.05 to 0.5 mass% is more preferable, and with respect to D, 0.01 to 0.3 mass% is more preferable. When the content is too small, the electric charge amount decreases, and when the content is too large, stability as an electret is lost due to increase in hygroscopicity.

The present invention is an electret formed of a polyolefin resin containing inorganic particles, and is characterized in that the inorganic particles or the polyolefin that are added have electret properties. As an electretizing method, a conventionally known method can be used. An example of the method is use of electric field, magnetic field, adhesion or collision of charged particles, liquid contact, or the like. As the liquid contact method, a method of causing electretization through contact with water or a liquid containing water is preferable. Through addition of the dispersant and the nitrogen-containing compound, the electric charge amount as an electret can be increased.

In the present invention, for the evaluation of the electric charge stability as an electret, a TSC (thermally stimulated current) method is used. Specifically, (1) a molded body is charged to obtain an electret. (2) Two electrodes are placed so as to be opposed to each other with both faces of the electret being sandwiched therebetween. (3) A picoammeter having a high impedance is connected to the electrodes on the both faces of the electret. (4) The resultant matter is put in a heating bath at 30°C or lower and short-circuited once, and then, the temperature is increased at 5°C/min, from a set condition of 25°C to the melting point of the polyolefin having the highest melting point among the component materials of the electret + 10°C or higher. (5) When the temperature is increased, the trapped electric charge is depolarized, and a current flows. Therefore, plotting is performed with the horizontal axis representing the electrode temperature and the vertical axis representing the current value. Accordingly, the electric charge transfer characteristic at each temperature can be measured. In the TSC method, there are a contact method and a non-contact method. However, from the viewpoint of sensitivity and stable acquisition of evaluation results by performing short-circuit operation before the temperature increase, the contact method is used in the present invention. It is known that the depolarization temperature according to the TSC method is related to the electric charge stability of an electret and the stability of performance as a filter (e.g., Memoirs of the Osaka Institute of Technology, 66(1), 1-18, Japanese Patent No. 3199947, etc.). The TSC method also has correlation with the electric charge stability in an electret charged by another technique, and, in the present invention, is used in evaluation of the electric charge stability as an electret.

In (1) above, a corona discharge method is used in order to unevenly distribute the electric charge (amount and polarity) in the thickness direction so that a sufficient depolarizing current can be observed with the TSC method. So as not to influence the measurement result in the TSC method, the temperatures of the atmosphere and the sample during charging are set to be 30°C or lower. The corona discharge method in the present invention is not intended for surface treatment such as oxidation or etching, and thus, it is important that the instruments and conditions are those used in production and research of the electret.

After performing the above charging, measurement by the TSC method is started within 10 minutes in an environment of the atmosphere temperature being 30°C or lower. For electrets that have histories such as transportation, storage, heating, or the like after production, it is necessary to charge the electret in advance again by the above-described method to be electretized, and then perform the measurement. The evaluation by the TSC method in the present invention is intended to evaluate the essential electric charge stability of the molded body material against heat so that influence of change in the electric charge amount due to various processing and lapse of time is eliminated. That is, even in a case of a fibrous product, a stacked body, or the like that has various types of histories (time, temperature, etc.), it is important that the electret portion is separated and TSC measurement is performed after charging, thereby evaluating the thermal history (temperature and time) in which depolarization occurs.

In the present invention, when a represents the maximum value of the depolarizing current at 50 to 100°C as measured by the TSC method, and b represents the maximum value of the depolarizing current at 100°C or higher as measured by the TSC method, a/b (/ represents division) is preferably 0.3 or smaller, more preferably 0.2 or smaller, and most preferably 0.1 or smaller. When the value of a/b is smaller, the proportion of depolarization at lower than 100°C is smaller, which results in an electret excellent in practicality having a small electric charge decay value during a thermal processing step such as pleating, transportation, and storage. With respect to those having a value of a/b exceeding 0.3 and being inferior in the electric charge stability, depolarization continuous to about 50°C to 150°C is observed, and the electric charge amount significantly decreases. In the present invention, the depolarization electric charge amount is represented as an a/b ratio, and it is needless to say that it is preferable that the depolarization electric charge amount during corona charging is larger on the high temperature side. Surprisingly, in the present invention, decrease in the electric charge stability of the electret when the dispersant is mixed is suppressed by adding the nitrogen-containing compound of one or more of A to D above, and further, can be improved. As each maximum value of the current shown above, it is important to use an appropriate value having continuity as data. An instantaneous spike value due to noise and an abnormal value due to short-circuit current are excluded from the measured value, in consideration of the numerical values before and after, the value a and b are determined based on an appropriate numerical value. When the current polarity is different between the maximum values up to 100°C and at 100°C or higher, division is performed on the absolute values of both.

With respect to the depolarizing current at 100°C or higher, those in which the peak temperature indicating the maximum value and the start temperature are high and the half width is narrow are preferable. For example, the peak temperature is 120°C or higher, more preferably 130°C or higher, and most preferably 140°C or higher. The rising temperature is preferably 80°C or higher, more preferably 90°C or higher, further preferably 100°C or higher, and most preferably 110°C or higher. The rising temperature is obtained as an intersection of the tangents of the measurement values before and after the peak.

In the present invention, further, in order to prevent reduction of the raw materials due to adhesion to the inside of a nozzle or the inside of an extruder, or "meyani" in Japanese (gum-like matter) that occurs at a discharge port, it is also preferable to add a lubricant component formed of a fatty acid amide, a fatty acid and a fatty acid metal salt, or a perfluoro derivative to suppress generation of an aggregated matter of the inorganic particles and nozzle clogging.

The electret of the present invention can be made as a molded body having any shape that is required, but the electret in the form of a fibrous product is suitable for use. The fibrous product includes fibrous products such as woven/knitted fabrics formed of filament fibers or staple fibers, nonwoven fabrics, and cotton-like products, and fibrous products obtained from stretched films, and can be formed so as to have an appropriate shape and thickness according to usage. When the electret is used for filter usage, a nonwoven fabric is most preferable.

As a method for obtaining a nonwoven fabric, it is possible to use a conventionally known method such as: a method of making a sheet of single component fibers, composite fibers such as core-sheath fibers and side-by-side fibers, or staple fibers such as splittable fibers, by carding, airlaid, a wet papermaking method, or the like; or a method of obtaining a nonwoven fabric composed of continuous fibers by a spunbond method, a meltblown method, an electrospinning method, a force spinning method, or the like. Among them, from the viewpoint of not requiring spinning oil and solvent treatment, a filament fiber nonwoven fabric obtained by a meltblown method, a melt electrospinning method, a melt force spinning method, or a spunbond method is more preferable as electret usage.

The average fiber diameter of the fiber used in the fibrous product of the present invention is preferably 0.001 to 100 µm, more preferably 0.005 to 20 µm, further preferably 0.01 to 10 µm, particularly preferably 0.02 to 5 µm, and most preferably 0.03 to 3 µm. When the average fiber diameter is larger than 100 µm, it is difficult to obtain practical collection efficiency, and decrease in efficiency during electric charge decay is large. When the diameter of the fiber is smaller than 0.001 µm, it is difficult to provide electric charge as an electret.

The fibrous product in the present invention may be a uniform matter obtained by a single production method and a single material or may be a mixture obtained by using two or more types of materials which have different fiber diameters and which are obtained by different production methods and different materials. In order to exhibit the characteristics, it is necessary for at least a part of the portion having the electret characteristics to be the composition of the present invention.

The electret of the present invention can be used in combination with another component member as necessary. When the electret of the present invention is used as a filter, use of the electret in combination with, for example, a pre-filter layer, a fiber protection layer, a reinforcement member, a functional fiber layer, or the like is also preferable. An electret filter using the electret of the present invention is also included in the category of the present invention.

The electret of the present invention and the electret filter using the same can be widely used due to the functions such as dust collection, protection, ventilation, antifouling, and waterproofing, and in particular, can be suitably used for dust protective masks, various air-conditioning elements, air cleaners, cabin filters, and filters for protecting various devices.

### EXAMPLES

In the following, the present invention will be further described in detail by means of examples, but the present invention is not limited by the examples below. Modifications within the gist of the present invention are all included in the technical scope of the present invention. First, the measurement method will be described.

### (Depolarizing current measurement by TSC method)

Using a thermally stimulated current measuring device manufactured by Toyo Seiki Seisaku-sho, Ltd., measurement was performed under the following conditions. Since the sample was a polypropylene resin sample, the measurement end point was set to be 180°C.
· Corona charge: flat plate needle electrode-staggered arrangement; interval of 10 mm; a 0.5 mm thick silicone rubber sheet was placed on the earth surface, and, with a gap of 10 mm, the sample (fiber sheet) was charged at application voltage 20 KV for charging time of 30 seconds.
· TSC electrode: the sample (diameter: 25 mm) was sandwiched by a pair of circular electrodes (diameter: 20 mm) such that both electrodes were opposed to each other. Both electrode surfaces were brought into contact with the sample surface.
· Temperature condition: the temperature was increased at 5°C/min from 25°C to 180°C.
· Others: After the sample was set between the electrodes, both electrodes were short-circuited once, to set the zero point of the current value. The obtained data was plotted with the horizontal axis representing the temperature °C and the vertical axis representing the current value [-], and the a/b value was obtained when a represented the peak height at 50 to 100°C and b represented the peak height at 100°C to 180°C.

### <Example 1>

With respect to a polypropylene homopolymer having an MFR of 1300, 0.85 mass% of zinc oxide having an average particle diameter of 0.8 µm as the inorganic particles, 0.15 mass% of glyceryl tris(1,2-hydroxystearate) (melting point: 89°C) as the dispersant, and 0.1 mass% of 1,3:2,4-bis(3,4-dimethylbenzylidene)-D-sorbitol as the nitrogen-containing compound were mixed, and the resultant matter was spun by using a meltblowing device at a resin temperature of 200°C and an air temperature of 200°C, to obtain a fiber sheet (filament fiber nonwoven fabric) having a weight per unit area of 30 g/m². As a result of performing the depolarizing current measurement according to the above TSC method on the obtained fiber sheet, the a/b value was 0.16.

### <Example 2>

With respect to a polypropylene homopolymer having an MFR of 1300, 2.55 mass% of zinc oxide particles having an average particle diameter of 0.8 µm as the inorganic particles, 0.45 mass% of glyceryl tris(1,2-hydroxystearate) (melting point: 89°C) as the dispersant, and 0.05 mass% of 1,3,5-tris(2,2-dimethylpropionylamino)benzene as the nitrogen-containing compound were mixed, and the resultant matter was spun by using a meltblowing device at a resin temperature of 200°C and an air temperature of 200°C, to obtain a fiber sheet having a weight per unit area of 30 g/m². As a result of performing the depolarizing current measurement according to the above TSC method on the obtained fiber sheet, the a/b value was 0.04.

### <Comparative Example 1>

Comparative Example 1 was obtained by the same manner as Example 1 except that, with respect to a polypropylene homopolymer having an MFR of 1300, only 2.55 mass% of zinc oxide particles having an average particle diameter of 0.8 µm as the inorganic particles, and 0.45 mass% of glyceryl tris(1,2-hydroxystearate) (melting point: 89°C) as the dispersant were added. As a result of performing the depolarizing current measurement according to the above TSC method on the obtained fiber sheet, the a/b value was 0.84.

### <Comparative Example 2>

Comparative Example 2 was obtained by the same manner as Example 1 except that spinning was performed by using only a polypropylene homopolymer having an MFR of 1300. As a result of performing the depolarizing current measurement according to the above TSC method on the obtained fiber sheet, the a/b value was 0.68.

Examples 1 and 2 and Comparative Examples 1 and 2 show that, according to the composition of the present invention, an excellent electret having electric charge stability while having inorganic particles and a dispersant can be obtained. When compared with the polypropylene resin only, it is understood that the electric charge stability decreases due to addition of the dispersant, and the present invention is effective. These are electrets and filament fiber nonwoven fabrics obtained through a meltblown method, and can also be suitably used for filter usage.

### INDUSTRIAL APPLICABILITY

According to the present invention, an electret and a filter that are excellent in electric charge stability while having inorganic particles and a dispersant can be obtained, and the present invention can significantly contribute to industries.

## Claims

1. An electret comprising:
inorganic particles and a dispersant in a polyolefin resin; and
a nitrogen-containing compound, wherein
a value of a/b is 0.3 or smaller when a represents a maximum value of a depolarizing current at 50 to 100°C as measured by a TSC method, and b represents a maximum value of a depolarizing current at 100°C or higher as measured by the TSC method.

2. The electret according to claim 1, wherein a content of the nitrogen-containing compound is 0.01 to 1 mass% with respect to the polyolefin resin.

3. The electret according to claim 2, wherein the nitrogen-containing compound includes at least one of A to D indicated below,
A: 1,3:2,4-dibenzylidene sorbitol,
B: 1,3:2,4-bis(4-methylbenzylidene)-D-sorbitol,
C: 1,3:2,4-bis(3,4-dimethylbenzylidene)-D-sorbitol, and
D: 1,3,5-tris(2,2-dimethylpropionylamino)benzene.

4. The electret according to claim 1 or 2, wherein the electret is a fibrous product.

5. The electret according to claim 1 or 2, wherein the electret is a filament fiber nonwoven fabric.

6. An electret filter using the electret according to claim 1 or 2.
